# EUROPEAN PATENT APPLICATION

(11) **EP 2 930 385 A1**
(43) Date of publication of application: **14.10.2015**
(21) Application number: 13859659.8
(22) Date of filing: 03.12.2013
(51) Int. Cl.: F16C 33/66, C10M 105/32, C10M 117/02, C10M 117/04, C10M 169/02, F16C 19/06, C10N 20/00, C10N 20/02, C10N 30/00, C10N 30/06, C10N 40/02, C10N 50/10

(54) **ROLLING DEVICE**

(30) Priority: 04.12.2012 JP 2012265253
(71) Applicant: NSK Ltd., Tokyo 141-8560 (JP)
(72) Inventor: WATABE Eri, Fujisawa-shi Kanagawa 251-8501 (JP); SONODA Kentaro, Fujisawa-shi Kanagawa 251-8501 (JP); TODA Yujiro, Fujisawa-shi Kanagawa 251-8501 (JP); HACHIYA Koichi, Fujisawa-shi Kanagawa 251-8501 (JP); YAMAMOTO Atsuhiro, Fujisawa-shi Kanagawa 251-8501 (JP); YAMAMOTO Masamichi, Fujisawa-shi Kanagawa 2518588 (JP); MATSUBARA Kenichiro, Fujisawa-shi Kanagawa 251-8588 (JP); IMAI Junichi, Fujisawa-shi Kanagawa 251-8588 (JP)
(74) Representative: Grünecker Patent- und Rechtsanwälte PartG mbB
(86) International application number: PCT/JP2013/082496
(87) International publication number: WO 2014/088006

(57) **Abstract**

This rolling device is filled with a grease composition which comprises both a base oil that exhibits a kinematic viscosity of 15 to 80mm²/s at 40°C and a thickening agent that comprises a mixture of lithium 12-hydroxystearate with a lithium salt of a C₆₋₁₂ fatty acid and which exhibits a dropping point of 190 to 240°C and a yield stress of 1.2 to 5kPa. Thus, a lowering in torque and an improvement in acoustic service life are achieved.

## Description

### Technical Field

The present invention relates to a rolling device, and particularly aims to reduce the torque and improving the acoustic life thereof.

### Background Art

In a home appliance motor such as an air conditioner fan motor, a rolling bearing supports a rotating shaft, and the bearing requires low torque. In order to reduce the torque, there has been employed a method of lowering the kinetic viscosity of a base oil or setting its penetration to a smaller value. However, if the base oil viscosity is excessively lowered, an oil film can be hardly formed on the rolling contact surface, and the lubricating performance may be lost or the durability may be deteriorated due to a decrease in the heat resistance.

The home appliance motor is often used indoors, and therefore, the bearing is required to maintain quietness for a long period of time. In order to enhance the acoustic life, there has been generally employed a method of raising the base oil viscosity for ensuring the formation of an oil film inside the bearing. However, when the base oil viscosity is raised, it becomes difficult to satisfy the above-described low torque at the same time.

In the rolling bearing for motors, a lithium soap-based grease produced by blending a lithium soap in a low-viscosity ester oil (see, for example, Patent Document 1) or a urea-based grease composition produced by blending a urea compound in a synthetic hydrocarbon oil (see, for example, Patent Document 2) is widely used at present. However, the lithium soap-based grease is insufficient in the heat resistance and has a problem with durability at high temperatures although the acoustic properties are good. On the other hand, the urea-based grease is excellent in the high-temperature durability but exhibits poor acoustic properties compared with the lithium soap-based grease, and can be hardly used in a place requiring quietness.

### Prior Art Document

### Patent Document

Patent Document 1: JP-A-2003-239996
Patent Document 2: JP-A-2004-211797

### Summary of the Invention

### Problem to be Solved by the Invention

The present invention has been made in view of these circumstances, and an object of the present invention is to provide a rolling device which aims to reduce the torque and improve the acoustic life and, in particular, is capable of maintaining quietness for a long period of time and suitable for a home appliance motor.

### Means for Solving the Problem

In order to attain the above-described object, the present invention provides the following rolling device.
(1) A rolling device comprising: an inner ring having an inner ring raceway on an outer peripheral surface thereof, an outer ring having an outer ring raceway on an inner peripheral surface thereof, a plurality of rolling elements rollably provided between the inner ring raceway and the outer ring raceway, and a cage, wherein a grease composition is enclosed in the rolling device, wherein:
   the grease composition contains: a base oil having a kinematic viscosity of 15 to 80 mm²/s at 40°C; and, as a thickener, a mixture of lithium 12-hydroxystearate and a lithium fatty acid having a carbon number of 6 to 12, and
   the grease composition has a dropping point of 190 to 240°C and a yield stress of 1.2 to 5 kPa.
(2) The rolling device as described in (1), wherein relative to an outer diameter of the rolling elements, a radius of curvature of a groove of the inner ring raceway is from 51 to 56% and a radius of curvature of a groove of the outer ring raceway is from 55 to 63%.
(3) The rolling device as described in (1) or (2), wherein the base oil is an ester oil.

### Effects of the Invention

In the grease composition enclosed in the rolling device of the present invention, the lithium soap used as a thickener is thin fiber-shaped and is excellent in the acoustic properties. In addition, the base oil viscosity is low, and therefore, a low torque is achieved. Since the yield stress is high, the grease can be suppressed from softening and in turn, prevented from leakage, as a result, not only the durability becomes excellent but also the stirring resistance decreases, leading to low torque. Furthermore, since a mixture of lithium 12-hydroxystearate and a lithium fatty acid having a carbon number of 6 to 12 is used, the heat resistance is more enhanced.

The groove of the inner ring raceway and the groove of the outer ring raceway are designed to have a large radius of curvature, so that the amount of grease retained can be decreased to reduce the torque.

In addition, when an ester oil is used for the base oil, the compatibility with a lithium soap as a thickener is increased to form a strong network structure and impart excellent shear stability, as a result, softening of the grease is prevented.

### Brief Description of the Drawings

Fig. 1 is a cross-sectional view showing one example of the rolling bearing.
Fig. 2 is a graph showing the relationship between the yield stress and the torque obtained in Examples.
Fig. 3 is a graph showing the relationship between the yield stress and the acoustic durability obtained in Examples.

### Detailed Description of Embodiments

The present invention is further described below by referring to the drawings.

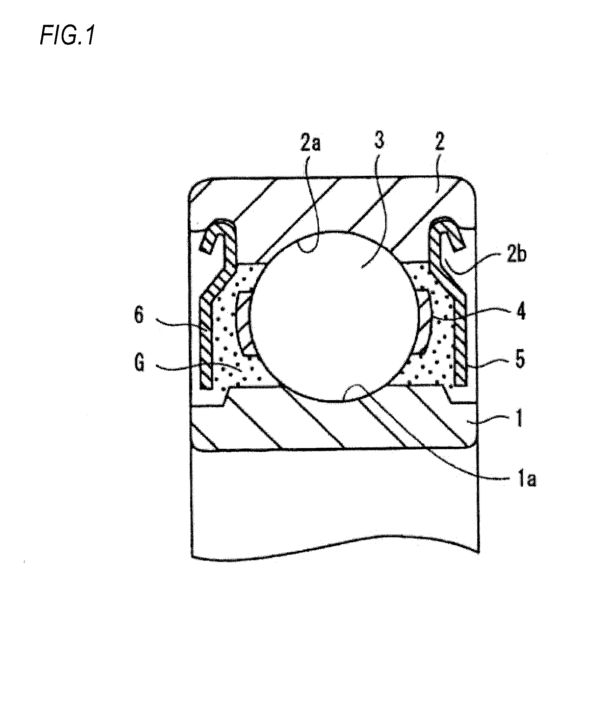

An example of the rolling device is a rolling bearing shown in Fig. 1. The rolling bearing shown in the figure includes an inner ring 1 having an inner ring raceway 1a on an outer peripheral surface thereof, an outer ring 2 having an outer ring raceway 2a on an inner peripheral surface thereof, and a plurality rolling elements 3 rotatably held by a cage 4 between the inner ring raceway 1 a and the outer ring raceway 2a, and furthermore, a grease composition G for lubrication is enclosed therein and sealed with a seal 5.

The radius of curvature of a groove of the inner ring raceway 1a is preferably from 51 to 56% relative to the outer diameter of the rolling element 3, and the radius of curvature of a groove of the outer ring raceway 2a is preferably from 55 to 63% relative to the outer diameter of the rolling element 3. In this way, the grooves of inner ring raceway 1a and outer ring raceway 2a are designed to have a larger radius of curvature, whereby the amount of the grease composition G retained can be decreased and the torque can be reduced. Preferably, the radius of curvature of the groove of the inner ring raceway 1a is from 53 to 56%, and the radius of curvature of the groove of the outer ring raceway 2a is from 56 to 63%.

In the present invention, a base oil having a kinematic viscosity of 15 to 80 mm²/s at 40°C is used in the grease composition G. By having such a base oil viscosity, reduction in the torque can be achieved. The base oil is preferably an ester oil since the ester oil has excellent affinity for a lithium soap as a thickener and can form a strong network structure. When the network structure is strong, the shear stability becomes excellent and softening of the grease composition can be prevented. In addition, the ester oil is excellent also in the heat resistance.

The ester oil is not limited, but preferred examples thereof include an aromatic ester oil obtained by the reaction of an aromatic tribasic acid or an aromatic tetrabasic acid with a branched alcohol, and a polyol ester oil obtained by the reaction of a monobasic acid with a polyhydric alcohol.

In particular, the aromatic ester oil includes, for example, a pyromellitic acid ester oil, a trimesic acid ester oil, which are an ester oil obtained by the reaction of an aromatic tribasic acid with a branched alcohol, specifically, trioctyl trimellitate and tridecyl trimellitate, and a pyromellitic acid ester oil obtained by the reaction of an aromatic tetrabasic acid with a branched alcohol, specifically, tetraoctyl pyromellitate.

The polyol ester oil includes those obtained by the reaction between a polyhydric alcohol and a monobasic acid which are described below and appropriately combined. As the monobasic acid, one monobasic acid may be used alone, or a plurality of monobasic acids may be used. Furthermore, the ester oil may also be used as a complex ester which is an oligoester of a polyhydric alcohol with a mixed fatty acid of a dibasic acid and a monobasic acid. The polyhydric alcohol includes trimethylolpropane, pentaerythritol, dipentaerythritol, neopentyl glycol, 2-methyl-2-propyl-1,3-propane, or the like. On the other hand, as the monobasic acid, a monovalent fatty acid having a carbon number of 4 to 16 is mainly used, and specific examples thereof include butyric acid, valeric acid, caproic acid, caprylic acid, enanthic acid, pelargonic acid, capric acid, undecanoic acid, lauric acid, mysteric acid, palmitic acid, beef tallow fatty acid, stearic acid, caproleic acid, palmitoleic acid, petroselinic acid, oleic acid, elaidic acid, asclepinic acid, vaccenic acid, sorbic acid, linoleic acid, linoic acid, abinic acid, and ricinoleic acid.

For the thickener, a mixture of lithium 12-hydroxystearate and a lithium fatty acid having a carbon number of 6 to 12 is used due to a thin fiber shape and excellent acoustic properties. Use of a mixture of lithium 12-hydroxystearate and a lithium fatty acid having a carbon number of 6 to 12 provides higher heat resistance than in the case of using lithium 12-hydroxystearate alone and causes an improvement in the acoustic properties. However, if a lithium fatty acid having a carbon number of 13 or more is mixed, the thickener is not firmly formed, as a result, the shear stability deteriorates and the acoustic life is reduced. The blending ratio between lithium 12-hydroxystearate and a lithium fatty acid having a carbon number of 6 to 12 is preferably, in terms of mass ratio, lithium 12-hydroxystearate : lithium fatty acid having a carbon number of 6 to 12 = from 25:75 to 75:25.

The dropping point of the grease composition G is from 190 to 240°C. If the dropping point is less than 190°C, the softening temperature is too low and the required heat resistance is not obtained. If the dropping point exceeds 240°C, the thickener can hardly be formed uniformly and the initial acoustic properties are poor. Considering the acoustic life, the dropping point is preferably from 200 to 240°C.

The yield stress of the grease composition G is from 1.2 to 5 kPa. The grease composition is subjected to shearing and expelled from the transfer face, and when the yield stress is high, the grease composition expelled is likely to stay in a stable position and prevented from re-entering the portion from which the composition is expelled. Generally, in a rolling bearing put under high surface pressure and high shearing, the grease composition tends to be subjected to harsh shearing and be softened, and the softened grease composition flows inside the bearing to increase the stirring resistance, resulting in high torque. In addition, the softened grease composition readily leaks out of the bearing and loses the lubricating ability early and in turn, the durability decreases. For this reason, in the present invention, the yield stress is set high to 1.2 kPa or more so as to prevent softening of the grease composition, reduce the torque and enhance the durability. However, as the yield stress becomes higher, the flowability decreases, and if the yield stress exceeds 5 kPa, the grease composition can be hardly supplied to the raceway surface, and the acoustic life is shortened. The yield stress is preferably from 2 to 4 kPa.

The dropping point and yield stress of the grease composition G can be adjusted to the ranges above by the kinematic viscosity or kind of the base oil, the kind or content of the thickener, the kneading at the time of production, and the like. For example, in the case of the same base oil, the yield stress can be adjusted by the content of the thickener, the kneading at the time of production, or the like.

In the grease composition G, various additives can be added according to the purpose, and all of those may be known.

### Examples

The present invention is further described below by referring to Examples, but the present invention is not limited thereto.

### (Examples 1 to 11 and Comparative Examples 1 to 12)

A general single row deep groove ball bearing "608" (inner diameter: 8 mm, outer diameter: 22 mm, width: 7 mm) was prepared as a bearing for a fan motor, and Bearings A to C were produced by changing the curvature of the grooves of the inner ring raceway and outer ring raceway as shown in Table 1.

In addition, grease compositions were prepared according to the formulations shown in Table 2. At this time, the amount of thickener and the kneading were adjusted to achieve the dropping point and yield stress shown in the table. Then, the grease composition was subjected to (1) yield stress measurement, (2) dropping point measurement, and (3) a shear stability test. Furthermore, test bearings were produced by enclosing each grease composition in Bearings A to C and subjected to (4) an initial acoustic test, (5) a bearing torque test, and (6) an acoustic durability test.

**Table 1**

| | Curvature at Inner Ring Raceway Surface (%) | Curvature at Outer Ring Raceway Surface (%) |
|---|---|---|
| Bearing A | 54 | 56 |
| Bearing B | 55 | 63 |
| Bearing C | 51 | 56 |

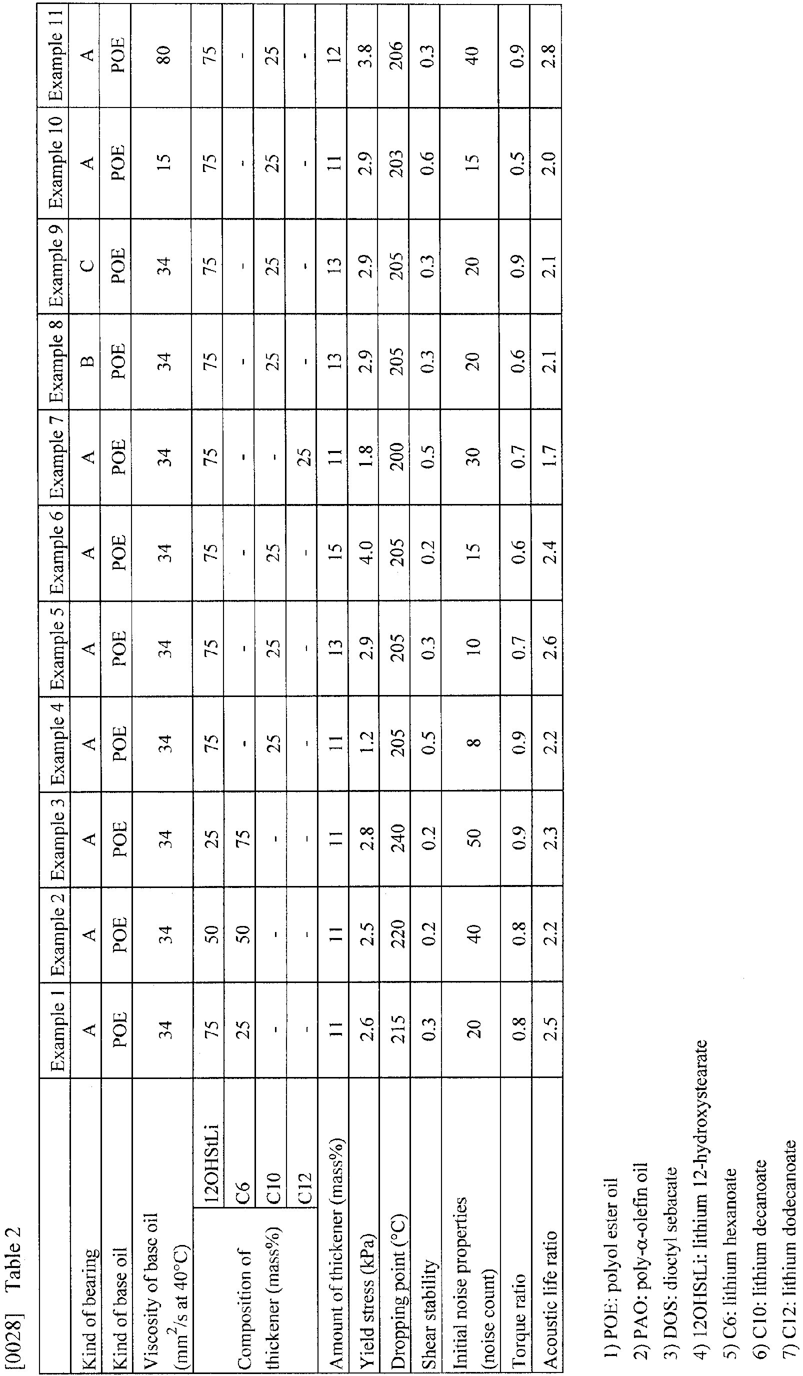

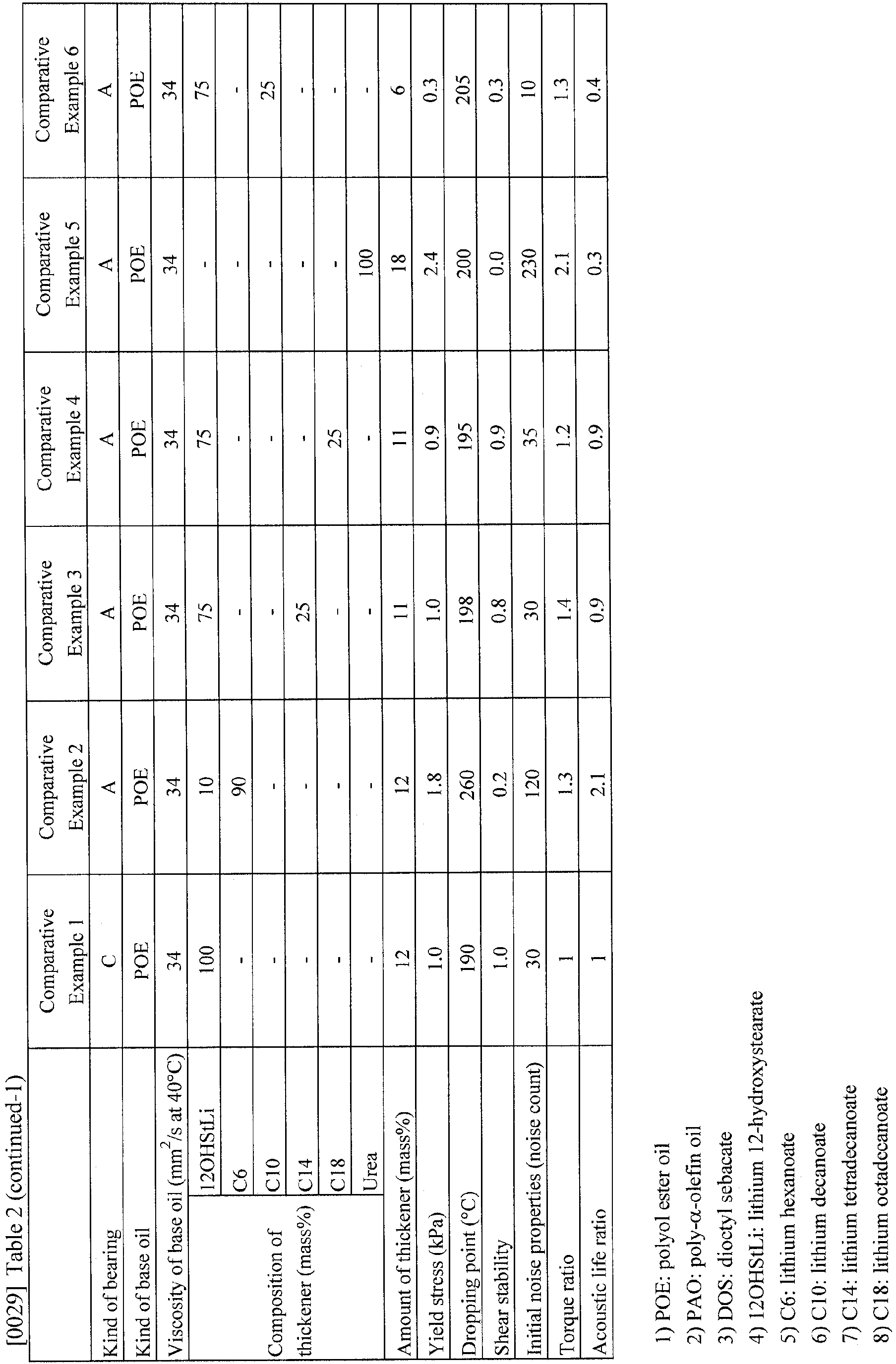

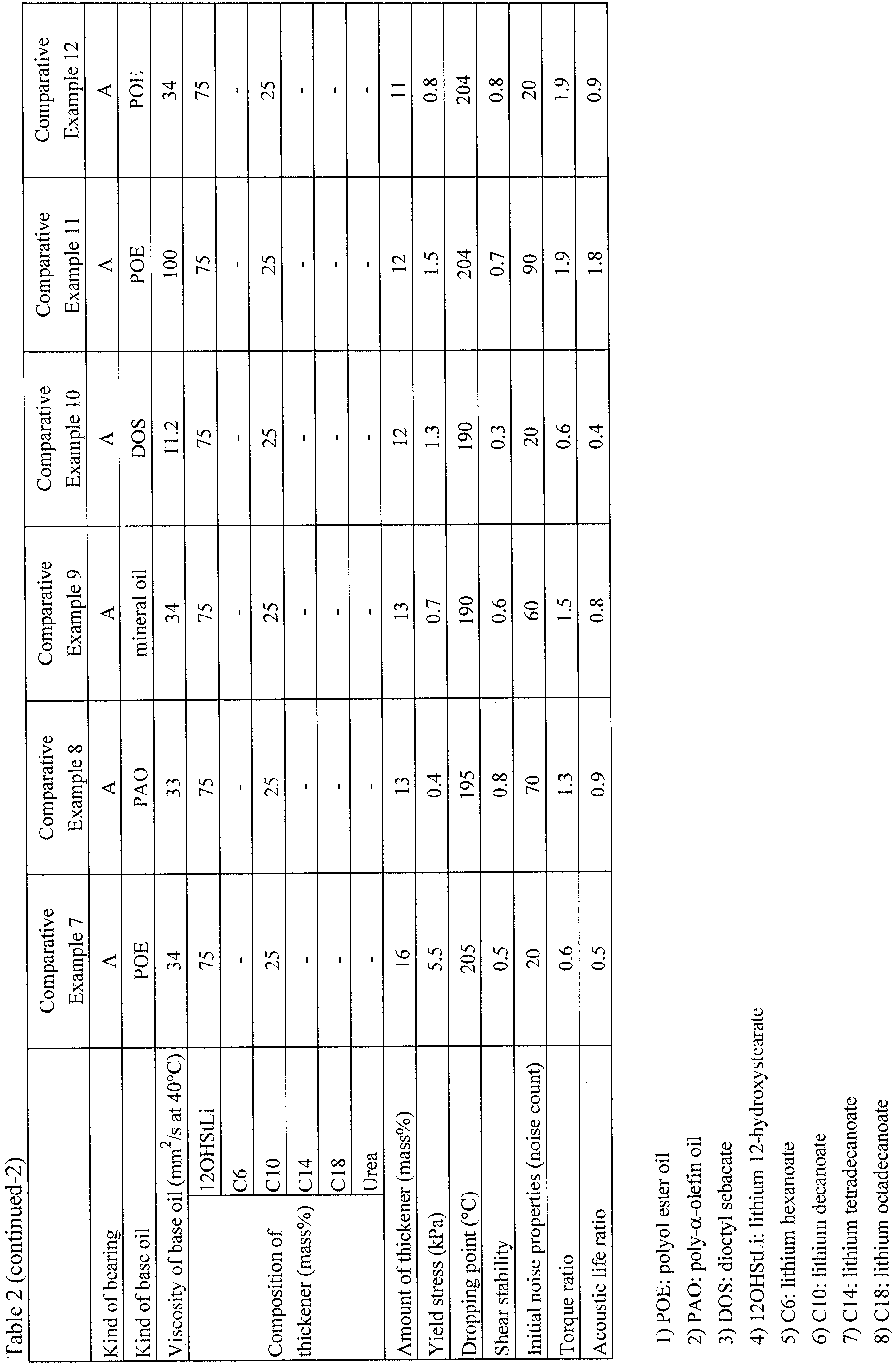

### (1) Yield Stress Measurement

The yield stress of the grease composition was measured using a rheometer (VAR viscoelasticity measuring apparatus, manufactured by REOLOGICA Instruments, Inc.). The measurement was performed using parallel plates with a gap of 0.1 mm for grease under the following conditions. As for the value of the yield stress, a shear stress value when the loss tangent tan θ (=G"/G') exceeds 1 was employed. The results are shown together in Table 2.

### (Measurement Conditions)

Measurement mode: oscillation mode
Test temperature: 30°C
Frequency: 10 Hz
Shear stress: from 10 to 5,000 Pa

### (2) Dropping Point Measurement

The dropping point that is a temperature at which the thickener in the grease is dissolved in the base oil, was measured in accordance with JIS K 2220. The results are shown together in Table 2.

### (3) Shear Stability Test

Shear was applied under the following conditions by using the Shell Roll Tester specified in ASTM D 1831, and the amount of change in the penetration between before and after the test was determined. The results are shown in Table 2 as a value relative to Comparative Example 1.

### (Measurement Conditions)

Amount of grease: 50 g
Test temperature: 25°C
Rotation speed: 165 min⁻¹
Test time: 2 hours

### (4) Initial Noise Properties (grease noise)

The initial noise properties of the grease composition were measured using a grease noise tester based on the method described in JP-A-S49-29886. More specifically, with respect to the test bearing (amount of enclosed grease: 160 mg), the grease noise count was determined until 30 seconds from the start of rotation. The test was performed under the conditions of a rotation speed of 1,800 min⁻¹, a load Fa = 29.4 N, M&H 20, a delay time of 0.6 seconds, and a count level of 10. The results are shown together in Table 2.

### (5) Bearing Torque Test

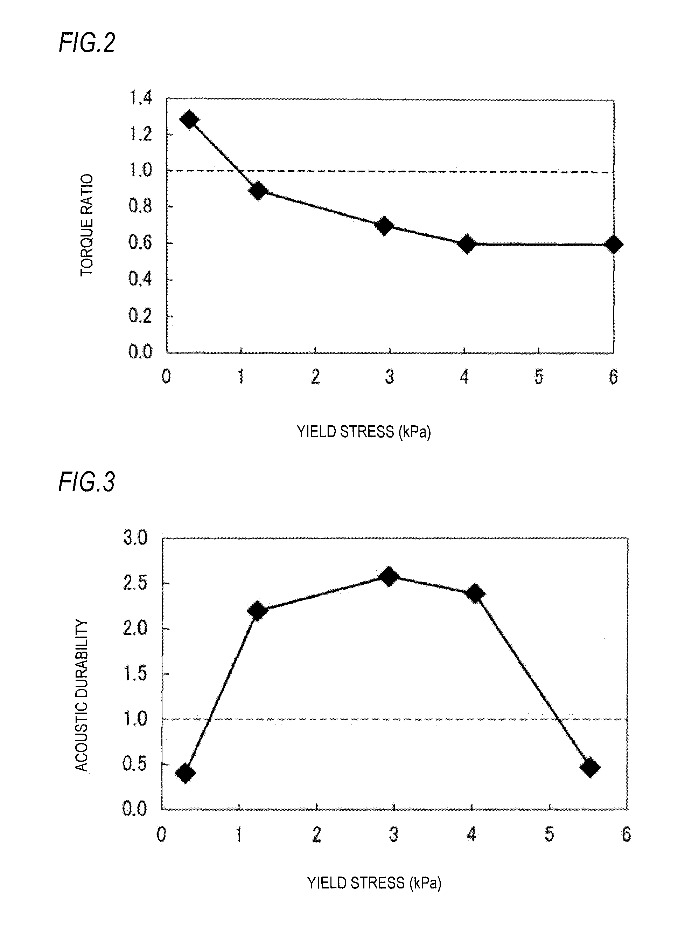

The test bearing (amount of enclosed grease: 160 mg) was rotated at room temperature and an inner ring rotation speed of 1,800 min⁻¹ under an axial load of 29.4 N, and the rotary torque after 60 minutes was measured. The results are shown in Table 2 and Fig. 2 as a value relative to Comparative Example 1.

### (6) Acoustic Durability Test

The test bearing (amount of enclosed grease: 160 mg) was rotated at 120°C and an inner ring rotation speed of 1,800 min⁻¹ under an axial load of 29.4 N, and the time period until the anderon value reaches 6 was measured. The results are shown in Table 2 and Fig. 3 as a value relative to Comparative Example 1.

In Comparative Example 1, lithium 12-hydroxystearate is used, and the yield stress is lower than the specified value.

In the grease compositions of Examples 1 to 3, a mixture of lithium 12-hydroxystearate and lithium hexanoate is used as the thickener, and the blending ratio therebetween is changed. In all of these compositions, the yield stress is high and moreover, since a bearing having a groove with a large radius of curvature is used, the torque is reduced, compared with Comparative Example 1.

In Examples 4 to 6 where the yield stress of grease is varied by using lithium decanoate in place of lithium hexanoate, the acoustic life is long and the yield stress is high, leading to low torque. Also in Example 7 where lithium dodecanoate is used, the acoustic life is long and the yield stress is high, leading to low torque.

However, when lithium tetradecanoate or lithium octadecanoate is used as in Comparative Examples 3 and 4, the acoustic life is shortened, and the torque becomes large. It is understood from these results that the carbon number of the lithium fatty acid is preferably from 6 to 12. Among others, a lithium fatty acid having a carbon number of 6 to 10, with which the acoustic life is increased 2 times or more, is preferred.

In Comparative Example 2, a mixture of lithium 12-hydroxystearate and lithium hexanoate is used as the thickener, but the ratio of lithium hexanoate is increased to 90 mass%, as a result, the dropping point is very high, the solubility of the thickener at the time of production is poor, the torque is larger and the acoustic life is shortened compared with Examples 1 to 3. It is understood from these results that the ratio of the lithium fatty acid having a carbon number of 6 to 12 is preferably 75 mass% or less as in Examples.

While the dropping point is 260°C in Comparative Example 2, the dropping point is from 190 to 240°C in Examples, revealing that the dropping point is preferably from 190 to 240°C. In particular, considering the acoustic durability, a dropping point of 200 to 240°C, at which the acoustic life is increased 2 times or more, is preferred.

In Comparative Example 5 where a urea compound is used as the thickener, the yield stress is high and the shear stability is excellent, but due to too high shear stability, the grease supply to the transfer face falls short, and the end of acoustic life is reached early. In addition, since the fiber of a urea compound is thick compared with that of a lithium soap, the urea compound readily forms a large mass due to intertwining with each other. Accordingly, a very large resistance is produced when a ball is pressed against a large urea compound mass, and the torque rises. For this reason, a lithium soap is preferred as the thickener.

In Comparative Example 6, a grease composition having a yield stress smaller than the specified value is used. In Comparative Example 12, the formulation is the same as that of Example 4, but due to a great difference in the production conditions, the yield stress is smaller than the specified value and in turn, the torque ratio is large. When the yield stress is small, re-entering of an accumulation of the grease composition expelled from the raceway surface often occurs, and the torque becomes high. On the other hand, in Comparative Example 7 where a grease composition having a yield stress larger than the specified value is used, since the grease composition does not move, the grease composition is not supplied to the raceway surface, so that the acoustic life is shortened. For this reason, the yield stress is preferably from 1.2 to 5 kPa as in Examples.

In Comparative Example 8 where a grease composition using PAO as the base oil is used, since compatibility of PAO with a lithium soap is poor, a fine thickener fiber is not formed, leading to reduction in the acoustic life, and since the grease is not easily hardened, the yield stress decreases, resulting in a rise of the torque. In Comparative Example 9 where a mineral oil is used as the base oil, the acoustic life is short due to poor heat resistance of the oil, and moreover, the yield stress is low, leading to a high torque. For this reason, the base oil is preferably an ester oil having good compatibility with a lithium soap as in Examples.

In Examples 10 to 11, the kinematic viscosity of the ester oil is varied, but when the base oil viscosity is in such a range, the torque can be reduced by raising the yield stress to allow for channeling, and the acoustic life is also extended. On the other hand, in Comparative Example 10, the kinematic viscosity of the ester oil is set to be lower than the specified value, but when the base oil viscosity is low, an oil film can be hardly formed on the transfer face, and metal contact is likely to occur. In addition, since the evaporated amount of the base oil increases, the initial state cannot be maintained, and the end of acoustic life is reached early. In Comparative Example 11, the kinematic viscosity of the ester oil is higher than the specified value, but when the base oil viscosity is high, although an oil film is readily formed on the contact surface and the metal contact can be prevented, the viscosity resistance becomes very high in terms of torque. For this reason, the kinematic viscosity of the base oil is preferably from 15 to 80 mm²/s (40°C).

In Examples 8 and 9, bearings differing in the radius of curvature of groove are used. The change in the radius of curvature causes a change in the amount of the grease composition retained, and with a bearing having a large radius of curvature, the torque can be made lower. Even in Bearing C having a small radius of curvature, when the yield stress, viscosity and dropping point of the grease composition are in the range of specified values, the torque is low, compared with Comparative Example 1.

Based on these Examples and Comparative Examples, the relationship between the yield stress and the torque ratio is graphically shown in Fig. 2, and the relationship between the yield stress and the acoustic life ratio is graphically shown in Fig. 3. As depicted in Fig. 2, there is a tendency that as the yield stress of the grease composition is increased, the torque is reduced, and when the yield stress becomes less than 1.2 kPa, plastic deformation is likely to occur under shearing and causes an increase in the amount of stirring inside the bearing, resulting in a rise of the torque. In addition, as seen from Fig. 3, when the yield stress is too small, the grease composition cannot stay on the periphery of the raceway surface and loses the lubricating ability early, causing a short acoustic life. However, when the yield stress is too high, the grease composition does not move and since the grease composition is not supplied to the raceway surface, the acoustic life is shortened. Therefore, the yield stress of the grease composition is set to be from 1.2 to 5 kPa, whereby the torque ratio and the acoustic life ratio can be satisfied in a balanced manner. In particular, when the yield stress is from 2 to 4 kPa, good results are obtained.

While the invention has been described in detail and with reference to specific embodiments thereof, it will be apparent to one skilled in the art that various changes and modifications can be made therein without departing from the spirit and scope of the invention.

This application is based on Japanese Patent Application No. 2012-265253 filed on December 4, 2012, the contents of which are incorporated herein by reference.

### Industrial Applicability

The rolling device of the present invention is suitable for various motors and can reduce the torque and improve the acoustic life.

### Description of Reference Numerals and Sings

- 1a:: Inner ring raceway
- 1:: Inner ring
- 2a:: Outer ring raceway
- 2:: Outer ring
- 3:: Rolling element
- 4:: Cage
- 5:: Seal
- G:: Grease composition

## Claims

1. A rolling device comprising: an inner ring having an inner ring raceway on an outer peripheral surface thereof; an outer ring having an outer ring raceway on an inner peripheral surface thereof; a plurality of rolling elements rotatably provided between the inner ring raceway and the outer ring raceway; and a cage, wherein a grease composition is enclosed in the rolling device, wherein:
the grease composition contains: a base oil having a kinematic viscosity of 15 to 80 mm²/s at 40°C; and, as a thickener, a mixture of lithium 12-hydroxystearate and a lithium fatty acid having a carbon number of 6 to 12, and
the grease composition has a dropping point of 190 to 240°C and a yield stress of 1.2 to 5 kPa.

2. The rolling device according to claim 1,
wherein relative to an outer diameter of the rolling elements, a radius of curvature of a groove of the inner ring raceway is from 51 to 56% and a radius of curvature of a groove of the outer ring raceway is from 55 to 63%.

3. The rolling device according to claim 1 or 2,
wherein the base oil is an ester oil.
